# EUROPÄISCHE PATENTSCHRIFT

(11) **EP 0 673 896 B1**
(45) Veröffentlichungstag und Bekanntmachung des Hinweises auf die Patenterteilung: **12.08.1998**
(21) Anmeldenummer: 95100731.9
(22) Anmeldetag: 20.01.1995
(51) Int. Cl.: C04B 11/30, C04B 28/02, C04B 28/14, C04B 28/16

(54) **Rissefreier Zementfliessestrich**
Castable cementitions mixture for crack-free floor coverings
Chape sans fissures à base d'un mélange coulable de ciment

(30) Priorität: 24.03.1994 DE 4410130
(43) Veröffentlichungstag der Anmeldung: 27.09.1995
(73) Patentinhaber: Heidelberger Zement AG, D-69120 Heidelberg (DE)
(72) Erfinder: Eipeltauer, Eduard, Prof.Dr.Dipl.-Ing., A-2344 Maria-Enzersdorf (AT)
(74) Vertreter: Schmid, Rudolf, Dipl.-Ing., Patentanwalt

(56) Entgegenhaltungen:
- EP-A- 0 103 119
- EP-A- 0 320 982
- DE-A- 2 528 304
- DE-A- 3 414 135
- DE-A- 3 937 431
- DE-A- 4 226 277
- FR-A- 2 219 916
- US-A- 3 852 081

## Beschreibung

Gegenstand der vorliegenden Erfindung ist ein rissefreier Zementfließestrich,bestehend aus einem Bindemittel enthaltend eine reaktive CaSO₄-Verbindung, Zement und übliche Zusätze sowie Zuschläge enthaltend Kalksteingrieß.

Aus der DE-OS 23 51 084 ist ein Verfahren zur Herstellung eines Körpers aus natürlichem oder synthetischem Anhydrit, abbindebeeinflussender Substanzen, Anmachwasser und ggf. Zusatzmittel bekannt, bei dem der Anhydrit, der Anreger und ggf. das Zusatzmittel mit Wasser in einem bestimmten Verhältnis gemischt und mittels einer Schneckenpumpe gefördert werden.
Dieser Anhydritmörtel ist zwar pumpfähig, aber nicht selbstnivellierend, so daß ein nachfolgendes Glätten erforderlich ist. Außerdem ist die Austrocknungszeit zu lang.

Die DE-OS 39 37 431 schlägt eine Verschleißschicht für Nutzböden vor, die wasserbeständig, frühbelastbar und abriebfest ist und aus einem Bindemittel enthaltend Zement, Gips, Kunststoffdispersion und übliche Zusätze sowie Zuschläge enthaltend Quarzsand und Kalksteinmehl besteht.

Bei der vorgeschlagenen Verschleißschicht ist erfindungswesentlich, daß es sich bei der Zementkomponente um einen aluminatarmen Zement handelt, vorzugsweise Portlandzement H S nach DIN 1164 (C₃A < 3 %).

Die Verwendung von Gipswerkstoffen als Klebe- bzw. Verfugungsmasse in der europäischen Anmeldung e 3 20 982 betrifft eine Mischung aus mit H₂O-reaktionsfähigem CaSOₑ und aluminatfreiem Zement. Als reaktionsfähiges CaSOₑ kommt hier αCaSOₑ·½H₂O zur Anwendung. Die Verwendung von Anhydrit ist ausgeschlossen, weil eine CaSOₑ-Masse auf die Verwendung in trockenen Räumen beschränkt wäre.

In die gleiche Richtung geht auch die Zementformulierung nach US-PS 3,852,081, wobei ein System aus CaSOₑ·½H₂O und Zement, enthaltend ≤ 7 % C₃A beansprucht wird.

DE-OS 34 14 135 offenbart ein Verfahren zur Herstellung von Bergbaumörtel oder Estrichgips, welche Anhydrit IIs enthalten. Von Bedeutung ist hier, daß der zugemischte Zement - in einer Menge von 0,5-10 Gew.-% (Anspruch 3) nur als Anreger für den Anhydrit dient. Ein Hinweis dahingehend, über die Formulierung CaSO₄/Zement die Stabilität des Ettringits im noch nicht erhärteten Mörtelbett zu gewährleisten, ist diesem Dokument nicht zu entnehmen.

Aus der DE-OS 25 28 304 ist eine Gipszusammensetzung zur Extrusionsformung bekannt mit dem Hauptkomponenten αCaSOₑ·½H₂O, ßCaSOₑ·½H₂O, Anhydrit II und ein hydrophiles Kolloid.

Aus der DE-OS 42 26 277 ist eine selbstnivellierende Fließestrichmischung, bestehend aus natürlichem und/oder synthetischem Anhydrit, Hochofenzement, Alkali-haltigem Flugstaub aus der Klinkerherstellung, Verflüssiger und Stabilisatoren sowie Brechsand bekannt.
Diese Fließestrichmischung ist jedoch nur für den Innenbereich geeignet.

Der Erfindung liegt die Aufgabe zugrunde, einen schwindungsfreien, selbstnivellierenden Zementfließestrich zur Verfügung zu stellen, bei dem im noch nicht erhärteten Mörtelbett bereits eine weitgehendste Bildung von Ettringit mit 32 Mol-Kristallwasser und CaSO₄ · 2H₂O ermöglicht wird.

Die Lösung dieser Aufgabe besteht erfindungsgemäß in den Merkmalen des Anspruchs 1. Weitere Ausgestaltungen der Erfindung sind in den Unteransprüchen gekennzeichnet.

Ein besonderer Vorteil des erfindungsgemäßen Zementfließestrichs besteht darin, daß er auch nach monatelanger Lagerung unter Wasser keine Treiberscheinungen aufweist. Der erfindungsgemäße Zementfließestrich trocknet rascher infolge größtmöglicher Ettringitbildung als herkömmliche Zement-enthaltende Estrichmassen.

Die als "aktiver Anhydrit IIs" bezeichnete CaSO₄-Verbindung entsteht aus Naturgips oder Chemiegips, der im Trägergasstrom im Temperaturbereich 300 - 600°C, bevorzugt im Bereich 450 - 550°C, erhitzt wird.

In der Literatur wird ein β-Anhydrit III' beschrieben, der bei sehr geringem Wasserdampf-Partialdruck aus dem Dihydrat direkt ohne die Zwischenstufe Halbhydrat entsteht und eine bis zu 10mal größere spezifische Oberfläche als der β-Anhydrit III hat (Encyklopädie für technische Chemie 1976, Bd. 12, S. 291). Beim sekundenschnellen Brand im Trägergasstrom bei 300 bis 600°C entsteht ebenfalls ohne die Zwischenstufe Halbhydrat dieser β-Anhydrit III', der aber unter diesen Brennbedingungen sehr rasch in einen Anhydrit IIs übergeht. Dieser Anhydrit IIs weist ebenfalls die bis zu 10mal größere spezifische Oberfläche auf und ist zudem infolge der explosionsartigen Entwässerung mit starken Gitterstörungen behaftet. Das bedingt eine besonders hohe Reaktivität. Nachdem in der Literatur für diesen "aktiven Anhydrit IIs" noch keine Bezeichnung (analog zum Anhydrit III' z. B. die Kennzeichnung Anhydrit IIs') zu finden ist, wird in der vorliegenden Beschreibung für diesen Grenzfall die Bezeichnung "aktiver Anhydrit IIs" beibehalten.

Aktiver Anhydrit IIs weist wohl ausschließlich die Feinstruktur des Anhydrits II (Röntgengitter) auf, in seiner Grobstruktur aber ähnelt er dem Anhydrit III. Daher ist er in der Lage, aus der Luft Wasser in noch vorhandene Kanäle und Mikrospalten einzulagern und so ein CaSO₄ · 1/2 H₂O vorzutäuschen (vgl. E. Eipeltauer, K. Moldan und H. Podest, Zement-Kalk-Gips, Heft 12, 1990, S. 591).

Die vollständige Bildung von Ettringit und CaSO₄ · 2H₂O wird erfindungsgemäß durch einen Anteil an aktivem Anhydrit IIs in der Zementfließestrich-Masse in der Höhe von 5 - 25 Massen-%, vorzugsweise 10 - 20 Massen-% ermöglicht.

Im Vergleich zu Naturgips und Naturanhydrit weist dieser Anhydrit IIs eine wesentlich höhere Löslichkeit und Lösungsgeschwindigkeit auf. Es entstehen stark an CaSO₄ übersättigte Lösungen im Zementfließestrich, die mit dem Trikalziumaluminat, dem Tetrakalziumaluminatferrit und der Glasphase des Portlandzementes reagieren. Nachdem in diesem erfindungsgemäßen Zementfließestrich auch nach dem völligen Erhärten stets ein Überangebot an Kalziumsulfatdihydrat besteht, ist die Stabilität des Ettringits 3CaO·Al₂O₃·3CaSO₄·32H₂O (Trisulfat) gewährleistet. Eine Umwandlung des Trisulfats in Monosulfat 3CaO·Al₂O₃·CaSO₄·12H₂O findet nicht statt, was sowohl für Festigkeit wie Formbeständigkeit bedeutungsvoll ist.

Es ist anzunehmen, daß sich beim Anmachen des Portlandzementes mit Wasser an der Grenzfläche 3CaO·Al₂O₃/CaSO₄-Lösung infolge des anfangs geringen Sulfatangebotes primär auf topochemischem Weg eine dünne Sperrschicht von Monosulfat spontan bildet, die die sogenannte Ruheperiode einleitet. Diese vermutlich sehr dünne Sperrschicht ist elektronenmikroskopisch und auch röntgenografisch schwer nachweisbar. Es hängt nun von der CaSO₄-Konzentration in der Lösungsphase ab, wie schnell sich diese Sperrschicht - vermutlich über eine Mischkristallreihe - in das nadelige Trisulfat umwandelt, das nun das Trikalziumaluminat nicht mehr in seiner weiteren Hydratation behindert. Bei 40 % PZ 375 - mit Kalkstein gemagert + Additive - lag der Abbindebeginn bei sechs Stunden. Bei 20 % PZ 375 + 20 % aktiver Anhydrit IIs im Fließestrich verkürzt sich dieser Abbindebeginn auf 2,5 Stunden, kann aber durch Verzögerer nach Bedarf verlängert werden.

Die Erfindung beschränkt sich nicht allein auf den Anhydrit IIs aus der Trägergas-Brennanlage. Aktiver Anhydrit IIs entsteht z. B. auch im Wirbelbett, in Kochern, Drehöfen, Röstöfen. Infolge der Uneinheitlichkeit und der geringeren Reaktivität dieser Produkte sind dieselben aber nicht so gut geeignet für die Herstellung von rissefreien Zementestrichen. Zementfließestriche mit Anteilen von 20 - 30 Massen-% PZ und 10 - 20 Massen-% aktivem Anhydrit IIs und Kalksteinzuschlag sind formbeständig. Bei monatelangen Lagerungen unter Wasser konnten nicht die geringsten Treiberscheinungen festgestellt werden. Nachdem sich der aktive Anhydrit IIs im weichen Mörtelbett zu Ettringit und Kalziumsulfatdihydrat umsetzt, besteht die Einbindung der Zuschlagstoffe in diesem erhärteten Zementfließestrich praktisch nur aus Tobermorit + Ettringit + Kalziumsulfatdihydrat.

In den nachfolgenden Beispielen sind Ausführungsformen der Erfindung näher erläutert. Unter "Additive" ist stets die Mischung 0,5 Massen-% Melamin-Formaldehydharz + 0,05 Massen-% Methyl-Cellulose + 0,03 Massen-% Entschäumer zu verstehen.

### Beispiel 1

30 Massen-% PZ 375
10 Massen-% REA 500°C (Rauchgasentschwefelungsgips bei 500°C im Trägergasstrom gebrannt)
60 Massen-% Kalksteingrieß der Korngröße 0,1 - 0,8 mm + Additive
Wasserfaktor = 0,21
Die Druckfestigkeit beträgt 52 N/mm² nach 28 Tagen.

### Beispiel 2

25 Massen-% PZ 375
15 Massen-% Naturgips im Trägergasstrom bei 550°C gebrannt
60 Massen-% Kalksteingrieß der Korngröße 0,1 - 0,8 mm + Additive
Wasserfaktor = 0,18
Die Druckfestigkeit beträgt 56 N/mm².

### Beispiel 3

20 Massen-% PZ 375
20 Massen-% Naturgips im Trägergasstrom bei 550°C gebrannt
60 Massen-% Kalksteingrieß der Korngröße 0,1 - 0,8 mm + Additive
Wasserfaktor = 0,19
Die Druckfestigkeit beträgt 50 N/mm².

### Beispiel 4

20 Massen-% PZ 375
10 Massen-% Naturgips bei 500°C im Trägergasstrom gebrannt
70 Massen-% Kalksteingrieß der Korngröße 0,1 - 0,8 mm + Additive
Wasserfaktor = 0,22
Druckfestigkeit = 49 N/mm².

## Patentansprüche

1. Rissefreier Zementfließestrich, bestehend aus einem Bindemittel, das eine reaktive CaSO₄-Verbindung, Zement und übliche Additive enthält sowie Kalksteingrieß-Zuschläge,
dadurch gekennzeichnet,
daß der Estrich aus
5-25 Masse-% der reaktiven CaSO₄-Verbindung in Form von Anhydrit IIs, der aus Naturgips oder Chemiegips, durch Erhitzen bei Temperaturen zwischen 300-600° C hergestellt ist, und
10-40 Massen-% Zement, Rest Additiven und Zuschlägen, jeweils bezogen auf den Estrich ohne Anmachwasser besteht, und daß auf einen Massenanteil Bindemittel 1,0 bis 3,0 Massenanteile Kalksteingrieß- Zuschläge vorhanden sind.

2. Zementfließestrich nach Anspruch 1,
dadurch gekennzeichnet,
daß Anhydrit IIs durch Erhitzen von Naturgips oder Chemiegips bei Temperaturen zwischen 450-550° C, hergestellt ist, insbesondere durch Erhitzen in einem Trägergasstrom.

3. Zementfließestrich nach Anspruch 1,
dadurch gekennzeichnet,
daß der Zement Portlandzement, Eisenportlandzement oder Hochofenzement ist.

## Claims

1. Crackfree cement flow screed composed of a binder containing a reactive CaSO₄ compound, cement, and the usual additives, as well as gritty limestone aggregates,
**wherein**
the screed contains
5-25% by mass of said reactive CaSO₄ compound in the form of anhydride IIs manufactured by heating natural or chemical gypsum at temperatures between 300°C and 600°C, and
10-40% by mass of cement, with the remaining percentage up to 100% being constituted of additives and aggregates, each of the foregoing quantities being relative to screed without mixing water,
and wherein the ratio is one part by mass of binder to 1.0 to 3.0 parts by mass of gritty limestone aggregates.

2. Cement flow screed according to claim 1
**wherein**
the anhydride IIs is manufactured by heating natural or chemical gypsum at temperatures between 450°C and 550°C, especially by heating them in a carrier gas current.

3. Cement flow screed according to claim 1
**wherein**
the cement is a portland cement, a portland blastfurnace cement or a portland blastfurnace slag cement.

## Revendications

1. Ciment à chape, fluide et sans fissures, constitué d'un liant qui contient un composé réactif CaSo₄, du ciment et les additifs habituels ainsi que des matériaux inertes en gravier calcaire,
caractérisé en ce que
le ciment à chape contient 5-25 masse % de composé réactif sous forme d'anhydrite IIs qui est fabriquée à partir de gypse naturel ou artificiel chauffé à des températures comprises entre 300 et 600° C et
10-40 masse % de ciment, additifs et matériaux inertes restants, calculés à chaque fois par rapport au ciment à chape sans eau de gâchage et que, pour une part de liant on a 1,0 à 3,0 parts de matériaux inertes sous forme de gravier calcaire.

2. Ciment à chape fluide d'après la revendication 1,
caractérisé en ce que
l'anhydrite IIs est produit par chauffage de gypse naturel ou artificiel à des températures comprises entre 450 et 500° C, en particulier par chauffage dans un flux de gaz porteur.

3. Ciment à chape fluide d'après revendication 1,
caractérisé en ce que
le ciment est du ciment de Portland, du ciment Portland de fer ou du ciment de laitier de haut-fourneau.
